# DEMANDE DE BREVET EUROPEEN

(11) **EP 0 620 143 A1**
(43) Date de publication de la demande: **19.10.1994**
(21) Numéro de dépôt: 94400788.9
(22) Date de dépôt: 12.04.1994
(51) Int. Cl.: B60S 1/38

(54) **Lame d'essuyage pour un essuie-glace de véhicule automobile**

(30) Priorité: 16.04.1993 FR 9304498
(71) Demandeur: VALEO SYSTEMES D'ESSUYAGE, 78180 Montigny-Le-Bretonneux (FR)
(72) Inventeur: Maubray, Daniel, F-92130 Issy-les-Moulineaux (FR)
(74) Mandataire: Gamonal, Didier

(57) **Abrégé**

L'invention propose une lame d'essuyage (10), notamment pour un essuie-glace de véhicule automobile, réalisée par extrusion et du type comportant, agencés successivement le long de l'axe médian (X-X) de la section transversale de la lame, un talon (12), un protège-griffe (14) et une partie d'essuyage (16) en forme de flèche dont la pointe (40) est prévue pour coopérer avec une vitre à essuyer et dont les ailes (42) s'étendent latéralement en direction du protège-griffe (14), caractérisée en ce que la largeur transversale (L) du talon, la largeur transversale (L) du protège-griffe et la distance transversale séparant les extrémités (44) des ailes (42) sont sensiblement égales.

## Description

La présente invention concerne une lame d'essuyage, notamment pour un essuie-glace de véhicule automobile.

L'invention concerne plus particulièrement une lame d'essuyage comportant, agencés successivement le long de l'axe médian de la section transversale de la lame, un talon, un protège-griffe et une partie d'essuyage en forme de flèche dont la pointe est prévue pour coopérer avec la vitre à essuyer et dont les ailes s'étendent latéralement en direction du protège-griffe.

Une lame d'essuyage selon cette conception présente plusieurs inconvénients.

Sa réalisation selon une technique d'extrusion à partir d'un matériau du type élastomère est difficile à mettre en oeuvre et on constate des déformations du profil général de la lame extrudée.

En utilisation, la partie d'essuyage de la lame doit normalement se retourner alternativement d'un côté et de l'autre, à chaque fois que le sens de balayage de l'essuie-glace s'inverse.

On constate toutefois que le retournement ne se produit pas de manière régulière ou se produit seulement partiellement ce qui nuit à l'efficacité de l'essuyage au moyen d'un essuie-glace équipé d'une telle lame d'essuyage.

Afin de remédier à ces inconvénients, l'invention propose une lame d'essuyage du type mentionné précédemment caractérisée en ce que la largeur transversale du talon, la largeur transversale du protège griffe et la distance transversale séparant les extrémités des ailes sont sensiblement égales.

Selon d'autres caractéristiques de l'invention :
- elle comporte un corps central massif auquel est relié le talon, auquel la partie d'essuyage est reliée par une bande médiane inférieure de liaison et à partir duquel deux branches du protège-griffe s'étendent latéralement de part et d'autre ;
- le talon comporte deux fentes latérales qui le divisent en un talon supérieur et un talon inférieur reliés entre eux par une bande médiane supérieure de liaison ;
- la face inférieure du corps central présente un profil en forme de V agencé en regard des faces supérieures des ailes ;
- l'épaisseur de chaque aile varie en diminuant en direction de son extrémité ;
- la face supérieure de chaque aile comporte une succession de facettes dont chacune forme un angle aigu par rapport à l'axe médian de la lame d'essuyage dont la valeur croît en s'éloignant de l'axe ;
- la première facette la plus proche de l'axe médian forme avec ce dernier un angle aigu dont la valeur est supérieure à celle de l'angle aigu que forme la branche en vis-à-vis de la face inférieure du corps central avec l'axe médian de la lame d'essuyage;
- la largeur de la première facette la plus proche de l'axe médian de la lame d'essuyage est au moins égale à la largeur de la branche en vis-à-vis de la face inférieure du corps central ;
- la largeur de la portion d'aile qui s'étend depuis l'extrémité de la première facette est telle que, en position inclinée d'essuyage de la partie d'essuyage de la lame, l'extrémité de l'aile est en appui contre la face inférieure en vis-à-vis de la branche correspondante du protège-griffe ;
- la face supérieure de chaque aile comporte deux facettes ;
- la largeur de la bande médiane inférieure de liaison est sensiblement égale à la largeur de la pointe de la partie d'essuyage en forme de flèche.

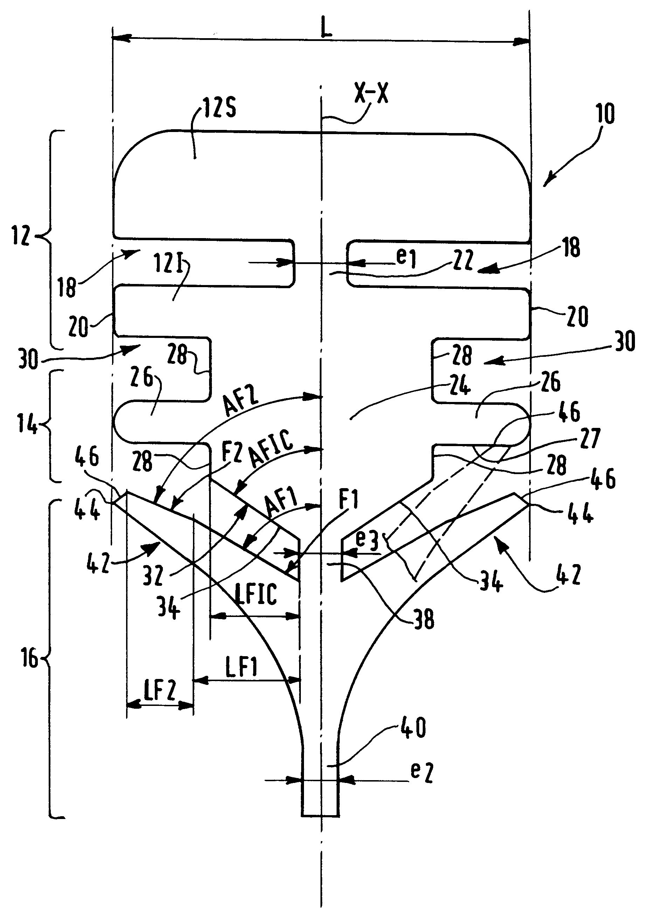

D'autres caractéristiques et avantages de l'invention apparaîtront à la lecture de la description détaillée qui va suivre pour la compréhension de laquelle on se reportera au dessin annexé dont la figure unique est une vue en section transversale d'une lame d'essuyage réalisée conformément aux enseignements de l'invention.

La lame d'essuyage 10 illustrée sur la figure est, selon une technique connue, réalisée par exemple par extrusion en un matériau du type élastomère.

La lame présente une symétrie de conception par rapport à un plan longitudinal médian dont la trace X-X constitue l'axe médian de symétrie de la section transversale de la lame d'essuyage.

La lame 10 comporte, agencés successivement de haut en bas en considérant la figure, un talon de lame 12, un protège-griffe 14 et une partie inférieure d'essuyage 16.

Le talon 12 est une partie massive qui, dans ce mode de réalisation, est divisée en un talon supérieur 12S et en un talon inférieure 12I par deux fentes latérales 18 qui s'étendent depuis les faces latérales 20 du talon 12 en direction de l'axe médian X-X et qui délimitent entre elles une bande médiane supérieure de liaison 22 d'épaisseur el.

Le talon 12 est relié au corps central massif 24 de la lame 12 qui est d'une largeur réduite par rapport à celle du talon.

Le protège-griffe 14 est constitué par deux branches 26 qui s'étendent transversalement depuis les faces latérales parallèles 28 du corps central 24.

Les branches 26 ont pour fonction de protéger les extrémités des griffes du balai d'essuie-glace (non représentées) qui tiennent la lame d'essuyage 10 qui sont reçues dans les évidements 30 délimités par les branches 26 et le talon inférieur 12I.

La face inférieure 32 du corps central 24 présente un profil en forme générale de V dont les deux branches 34 sont sensiblement rectilignes et s'étendent latéralement en formant un angle aigu AFIC par rapport à l'axe médian X-X.

La partie inférieure d'essuyage 16 est reliée au corps central 24 par une bande médiane inférieure de liaison 38, appelée plus communément charnière, qui s'étend verticalement depuis la face inférieure 32 du corps central 24.

La partie d'essuyage 16 présente une forme générale de flèche comportant une pointe 40 et deux ailes 42.

La pointe 40 se présente sous la forme d'une bande mince de largeur e2.

Selon une première caractéristique de l'invention, les largeurs transversales du talon 12, du protège-griffes 14 et la distance transversale séparant les extrémités 44 des ailes 42 sont égales à une largeur commune L.

Selon une autre caractéristique de l'invention, chaque aile 42 est formée de manière que son épaisseur moyenne diminue depuis l'axe médian X-X en direction de son extrémité 44.

A cet effet, la face supérieure de chaque aile 42 tournée vers la face inférieure 32 du corps central 24 comporte deux facettes planes F1 et F2 agencées successivement en direction de l'extrémité 44.

La première facette F1 forme un angle aigu AF1 par rapport à l'axe médian X-X qui est légèrement inférieur à l'angle aigu AF2 que forme la seconde facette F2 par rapport à l'axe médian X-X.

La largeur LF1 de la première facette F1 est légèrement supérieure à la largeur LFIC de la face inférieure 32 du corps central 24 tandis que la largeur LF2 de la seconde facette F2 est telle que, comme cela est illustré en trait mixte à la partie droite de la figure, la petite face d'extrémité 46 de l'aile puisse venir en appui contre la face inférieure 27 de la branche correspondante 26 du protège-griffe 14 lorsque la partie d'essuyage 16 est inclinée, c'est-à-dire lorsqu'elle pivote par rapport à l'axe X-X, sensiblement autour du centre de la bande médiane inférieure de liaison 38.

Cette caractéristique de l'invention permet de garantir, lorsque le mouvement de balayage de l'essuie-glace s'inverse, que la lame d'essuyage se retourne complètement, l'effet de retournement étant favorisé par la légère compression à laquelle est soumise la branche 42 lors de la phase précédente.

Afin d'obtenir une extrusion régulière de la lame d'essuyage, les épaisseurs el, e2 et l'épaisseur e3 de la bande médiane inférieure de liaison 38 sont sensiblement égales.

## Revendications

1. Lame d'essuyage (10), notamment pour un essuie-glace de véhicule automobile, réalisée par extrusion et du type comportant, agencés successivement le long de l'axe médian (X-X) de la section transversale de la lame, un talon (12), un protège-griffe (14) et une partie de raclage en forme de flèche dont la pointe (40) est prévue pour coopérer avec une vitre à essuyer et dont les ailes (42) s'étendent latéralement en direction du protège-griffe (14), caractérisée en ce que la largeur transversale (L) du talon (12), la largeur transversale (L) du protège-griffe (14) et la distance transversale séparant les extrémités (44) des ailes (42) sont sensiblement égales.

2. Lame d'essuyage selon la revendication 1, caractérisée en ce qu'elle comporte un corps central massif (24) auquel est relié le talon (12), auquel la partie d'essuyage (16) est reliée par une bande médiane inférieure de liaison (38) et à partir duquel (24) deux branches (26) du protège-griffe (14) s'étendent latéralement de part et d'autre.

3. Lame d'essuyage selon l'une des revendications 1 ou 2, caractérisée en ce que le talon (12) comporte deux fentes latérales (18) qui le divisent en un talon supérieur (12S) et un talon inférieur (12I) reliés entre eux par une bande médiane supérieure de liaison (22).

4. Lame d'essuyage selon l'une quelconque des revendications précédentes, caractérisée en ce que la face inférieure (32) du corps central (24) présente un profil en forme de V agencé en regard des faces supérieures des ailes (42).

5. Lame d'essuyage selon l'une quelconque des revendications précédentes, caractérisée en ce que l'épaisseur de chaque aile (42) varie en diminuant en direction de son extrémité (44).

6. Lame d'essuyage selon la revendication 5, caractérisée en ce que la face supérieure de chaque aile comporte une succession de facettes (F1, F2) dont chacune forme un angle aigu (AF1, AF2) par rapport à l'axe médian (X-X) de la lame d'essuyage (10) dont la valeur croît en s'éloignant de l'axe (X-X).

7. Lame d'essuyage selon la revendication 6 prise en combinaison avec la revendication 4, caractérisée en ce que la première facette (F1) la plus proche de l'axe médian (X-X) forme avec ce dernier un angle (AF1) aigu dont la valeur est supérieure à celle de l'angle aigu (AFIC) que forme la branche en vis-à-vis de la face inférieure (32) du corps central (24) avec l'axe médian (XX) de la lame d'essuyage.

8. Lame d'essuyage selon l'une des revendications 6 ou 7 prise en combinaison avec la revendication 4, caractérisée en ce que la largeur (LF1) de la première facette (F1) la plus proche de l'axe médian (X-X) de la lame d'essuyage est au moins égale à la largeur (LFIC) de la branche en vis-à-vis de la face inférieure (32) du corps central (24).

9. Lame d'essuyage selon l'une des revendications 7 ou 8 prises en combinaison avec la revendication 2, caractérisée en ce que la largeur (F2) de la portion d'aile qui s'étend depuis l'extrémité de la première facette (F1) est telle que, en position inclinée d'essuyage de la partie d'essuyage (16) de la lame, l'extrémité de l'aile (44) est en appui contre la face inférieure en vis-à-vis (27) de la branche correspondante (36) du protège-griffe.

10. Lame d'essuyage selon la revendication 2, caractérisée en ce que la face supérieure de chaque aile comporte deux facettes (F1, F2).

11. Lame d'essuyage selon la revendication 2, caractérisée en ce que l'épaisseur (e3) de la bande médiane inférieure de liaison (38) est sensiblement égale à l'épaisseur (e2) de la pointe (40) de la partie d'essuyage (16) en forme de flèche.
